(19) Europäisches Patentamt
European Patent Office
Office européen des brevets

(11) **EP 3 215 333 B1**

(12) **EUROPÄISCHE PATENTSCHRIFT**

(45) Veröffentlichungstag und Bekanntmachung des Hinweises auf die Patenterteilung:
**29.01.2020 Patentblatt 2020/05**

(21) Anmeldenummer: **15790839.3**

(22) Anmeldetag: **04.11.2015**

(51) Int Cl.:
***B29B 9/06*** *(2006.01)*
***B29B 9/12*** *(2006.01)*
***B01J 2/22*** *(2006.01)*
***B29C 48/00*** *(2019.01)*
***B29C 48/04*** *(2019.01)*
***B29C 48/05*** *(2019.01)*
***B29C 48/16*** *(2019.01)*
***B29C 48/30*** *(2019.01)*
***B29C 48/88*** *(2019.01)*
***B29C 48/92*** *(2019.01)*
*B29B 9/16 (2006.01)*
*B29K 91/00 (2006.01)*
*B29K 101/12 (2006.01)*

(86) Internationale Anmeldenummer:
**PCT/EP2015/002216**

(87) Internationale Veröffentlichungsnummer:
**WO 2016/070994 (12.05.2016 Gazette 2016/19)**

(54) **QUETSCHWALZENGRANULATOR, GRANULIERANLAGE AUFWEISEND EINEN SOLCHEN, UND VERWENDUNG DES QUETSCHWALZENGRANULATORS**

SQUEEZING-ROLL GRANULATOR, GRANULATING SYSTEM COMPRISING SAME, AND USE OF THE SQUEEZING-ROLL GRANULATOR

GRANULATEUR À ROULEAUX PINCEURS, INSTALLATION DE GRANULATION COMPRENANT CELUI-CI ET UTILISATION DU GRANULATEUR À ROULEAUX PINCEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.11.2014 DE 202014008800 U**

(43) Veröffentlichungstag der Anmeldung:
**13.09.2017 Patentblatt 2017/37**

(73) Patentinhaber: **Maag Automatik GmbH**
**63762 Großostheim (DE)**

(72) Erfinder: **MEIDHOF, Helmuth**
**63762 Grossostheim (DE)**

(74) Vertreter: **Spranger, Stephan**
**Spranger + Burger**
**Patentanwälte**
**Widenmayerstrasse 28**
**80538 München (DE)**

(56) Entgegenhaltungen:
**EP-A1- 1 772 250**
**EP-A2- 0 240 906**
**WO-A1-2014/127914**
**DE-A1- 3 622 053**
**DE-A1-102007 016 347**
**DE-A1-102012 008 564**
**US-A- 4 028 024**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 215 333 B1

## Beschreibung

Die Erfindung betrifft einen Quetschwalzengranulator mit Quetschwalzenpaar, das eine verzahnte Andruckwalze und eine verzahnte Quetschwalze aufweist, wobei die Verzahnung der Andruckwalze und der Quetschwalze Zahnflanken aufweist, die zwischen einem Zahnfußbereich und einem Zahnkopfbereich angeordnet sind, und wobei der Zahnfußbereich einen Außendurchmesser aufweist, der geringer ist als der Außendurchmesser des Zahnkopfbereichs.

Eine derartige Vorrichtung eines Quetschwalzengranulators zum Granulieren von Strängen aus Kunststoffmaterial und ähnlichen plastischen Massen ist aus der Druckschrift DE 31 45 614 C2 bekannt, wobei die Stränge aus Kunststoffmaterial und ähnlichen plastischen Massen nachfolgend als Kunststoffstränge bezeichnet werden, insbesondere wenn sie einen Hüllschlauch mit eingeschlossener Füllmasse aufweisen. Die bekannte Quetschwalzenvorrichtung weist eine Zuführeinrichtung für wenigstens einen äußerlich verfestigten Strang auf, die zu einem um parallele Achsen gegenläufig antreibbaren Walzenpaar führt. Von dem Walzenpaar ist wenigstens eine Walze aus gegenüber dem Kunststoffmaterial hartem Material hergestellt und weist im Wesentlichen axial verlaufende umfangsverteilte Vorsprünge auf. Radial äußere Enden der Quetschwalze arbeiten mit einer glatten zylindrischen Oberfläche der Andruckwalze zusammen. Dabei sollen die radial äußeren Flächenbereiche der Vorsprünge an der Andruckwalze annähernd zum Anliegen kommen, so dass die Walze in dieser Lage unter Vorspannung in einem Anschlag gehalten ist und das Kunststoffmaterial des Kunststoffstranges in Granulate zerteilt wird.

Ein Nachteil dieser Vorrichtung ist es, dass sie nicht in der Lage ist Granulatkissen aus Hüllbeuteln mit einer Füllmasse herzustellen, wie sie in vielfachen Variationen für unterschiedliche Anwendungszwecke benötigt werden.

Für diesen Bedarf sind aus den Druckschriften DE 103 47 908 A1, DE 38 32 566 C2 und aus der Auslegeschrift DE 1 297 525 A Verfahren und Vorrichtungen bekannt, die ein Coextrusionsverfahren einsetzen, um einen mehrschichtigen Kunststoffbehälter aus schlauchförmig coextrudierten Kunststoffmaterialien herzustellen, der zu Behältern geformt wird, wobei ein Fülldom ermöglicht, nach dem Coextrudieren des Behälters eine Füllmasse in den coextrudierten und ausgeformten Behälter einzubringen.

Der Nachteil derartiger Vorrichtungen, die coextrudierte Behälter mit anschließender Befüllung durch einen Fülldom ermöglichen, ist der komplexe Aufbau der Vorrichtung zum Ausformen der coextrudierten Behälter unter anschließendem schrittweisem Befüllen der Behälter durch einen Fülldom und einem abschließenden Verschließen des Behälters. Ferner wird aufgrund der relativ komplexen Befüllvorgangs erst ab einer gewissen Behältergröße eine wirtschaftlich sinnvolle Herstellung möglich.

Weiterhin ist aus der Druckschrift DE 36 22 053 A1 ein Verdichtungsgerät bekannt, das ein Paar Verdichtungswalzen aufweist. Die Verdichtungswalzen weisen alternierend Umfangsringvorsprünge zur Ausbildung von Formwegen zwischen ihnen und dem Abstreifer auf. Der Abstreifer sitzt auf einer Auslassseite der Verdichtungswalzen und zu den Formwegen hin und ist von diesen weg bewegbar. Dadurch können die Formwege geöffnet und geschlossen werden. Ferner weist das Verdichtungsgerät ein Zuführteil mit einem sich nach unten verjüngenden Kehlteil auf, dessen Innenumfangswand etwa in Berührung mit den Außenflächen ist. Dazu weisen beide Verdichtungswalzen einander gegenüberstehende jeweils gezahnte Oberfläche mit spitz zulaufenden Trennstegen bzw. Trennzähnen auf, die jedoch über keinen ausgeprägten Zahnkopfbereich verfügen

Das Dokument WO 2014/127914 A1 beschreibt einen Quetschwalzengranulator ohne synchron betriebene Quetschwalzen.

Das Dokument US 4 028 024 A beschreibt eine Vorrichtung zur Erzeugung von kissenförmigen Elementen, bei welcher zwei entsprechend mit Ausnehmungen versehene Walzen synchronisiert die entsprechenden Kissen formen.

Es ist die Aufgabe der vorliegenden Erfindung, einen Quetschwalzengranulator mit einem Quetschwalzenpaar zu schaffen, das in der Lage ist Granulatkissen zu formen und abzudichten, die eine Umhüllung mit einer portionierten Füllmasse aufweisen.

Diese Aufgabe wird erfindungsgemäß mit einem Quetschwalzengranulator mit den Merkmalen gemäß dem Anspruch 1 gelöst. Bevorzugte Ausführungsformen der Erfindung sind in den Unteransprüchen definiert.

Der erfindungsgemässe Quetschwalzengranulator weist ein Quetschwalzenpaar aus einer verzahnten Andruckwalze und eine verzahnte Quetschwalze auf, wobei die Verzahnung Zahnflanken aufweist, die zwischen einem Zahnfußbereich und einem Zahnkopfbereich angeordnet sind, und wobei der Zahnfußbereich einen Außendurchmesser aufweist, der geringer ist als der Außendurchmesser des Zahnkopfbereichs, und wobei wenigstens eine der Walzen des Quetschwalzenpaares in dem Zahnkopfbereich drei Quetschzonen mit einer Mittenquetschzone aufweist, die unterschiedliche Abstände zu der zylindrischen Andruckwalze definieren mit einem minimalen Abstand im Bereich der Mittenquetschzone, und wobei die Kontur der Zahnflanken und des Zahnfußbereichs der Walzen des Quetschwalzenpaares einen maximalen Querschnitt von zu formenden Granulatkissen definieren, und wobei das maximale Füllvolumen zusätzlich von der Breite, zu der das Granulatkissen gequetscht wird, abhängt.

Der Vorteil des erfindungsgemäßen Quetschwalzengranulators ist, dass er mit einer einzigen Quetschwalzenumdrehung eine Vielzahl von Füllmassen in Granulatkissen portioniert und mediendicht einschließen kann, was mit dem bisher bekannten Quetschwalzengranulator, der lediglich vorverfestigte Stränge zu Kunststoffgranulaten auftrennt, nicht möglich ist. Auch die aus den oben zitierten Druckschriften bekannten Vorrichtungen zum Coextrudieren von mehrschichtigen Behältern mit Auffüllen der Behälter über einen Fülldom und anschließendem Verschließen der Behälter sind nicht in der Lage, eine Massenproduktion an präzise portionierten Füllmassen in einer Außenhülle mediendicht zu ermöglichen. Ein weiterer Vorteil gegenüber Quetschwalzengranulatoren, die lediglich eine einzige verzahnte Quetschwalze aufweisen, besteht darin, dass mit dem erfindungsgemäßen Quetschwalzengranulator in jedem Granulatkissen praktisch die doppelte Menge an Füllmasse eingeschlossen werden kann. Ferner ist somit auch eine relativ einfache Möglichkeit der Herstellung von im Längsquerschnitt symmetrisch oder im wesentlichen symmetrisch geformten Granulatkissen möglich, wobei bevorzugt insbesondere die entsprechende obere und untere Hüllkurve symmetrisch ausgebildet sein können.

Gemäß der Erfindung ist es vorgesehen, dass sich der Zahnfußbereich von einem Ende einer abfallenden Zahnflanke zu einem Anfang einer ansteigenden Zahnflanke erstreckt und der Zahnkopfbereich entsprechend von einem Ende einer ansteigenden Zahnflanke zu einem Anfang einer abfallenden Zahnflanke erstreckt. Die drei Quetschzonen des Zahnkopfbereichs weisen eine Eingangsquetschzone auf, die in einer Zufuhrrichtung angeordnet ist, eine Ausgangsquetschzone, die in einer Abfuhrrichtung angeordnet ist, und die Mittenquetschzone, die zwischen Eingangs- und Ausgangsquetschzone angeordnet ist. Dabei werden die Eingangs- und Ausgangsquetschzonen der Verzahnung von den Zahnflanken begrenzt. Außerdem definieren die Eingangsquetschzone einen sich zu der Mittenquetschzone hin vermindernden Abstand zwischen den Walzen des Quetschwalzenpaares und die Ausgangsquetschzone einen sich von der Mittenquetschzone aus vergrößernden Abstand zwischen den Walzen des Quetschwalzenpaares.

Erfindungsgemäß ist damit der Vorteil verbunden, dass die Füllmasse bei den aufeinander abwälzenden Oberflächen der Zahnkopfbereiche der Walzen des Quetschwalzenpaares eines zugeführten, mit Füllmassen gefüllten Hüllschlauch derart verdrängt werden können, dass in der Eingangsquetschzone eine mediendichte Verschweißung des Hüllmaterials zu einer Eingangsdichtnaht auftritt und das Gleiche auch in Ausgangsquetschzonen des Zahnkopfbereichs erfolgt, in denen mediendichte Ausgangsdichtnähte gebildet werden. In der Mittenquetschzone, die einen minimalen Abstand zwischen den Zahnkopfbereichen der Walzen des Quetschwalzenpaares aufweisen, entsteht ein Sollbruchnahtprofil, bei dem aneinandergrenzende Granulatkissen voneinander getrennt werden können.

In einer Ausführungsform kann ausschließlich nur eine der beiden Walzen des Quetschwalzenpaares in dem Zahnkopfbereich die drei Quetschzonen aufweisen, während die andere der beiden Walzen des Quetschwalzenpaares jeweils einen glatten zylindrisch gerundeten Zahnkopfbereich aufweist. Das hat den Vorteil, dass geringe Abweichungen von einem Synchronlauf der beiden Quetschwalzen toleriert werden können.

Alternativ ist es vorgesehen, dass beide Quetschwalzen des Quetschwalzenpaares in ihren Zahnkopfbereichen die drei Quetschzonen aufweisen, dieses hat den Vorteil, dass bei exakter Synchronisation der Rotationen der beiden Quetschwalzen der Verschleiß pro Quetschwalze vermindert und damit die störungsfreie Laufzeit des Quetschwalzengranulators verlängert wird. Auch die Einstellung definierter Spaltmaße zwischen den Quetschwalzen kann so erleichtert werden.

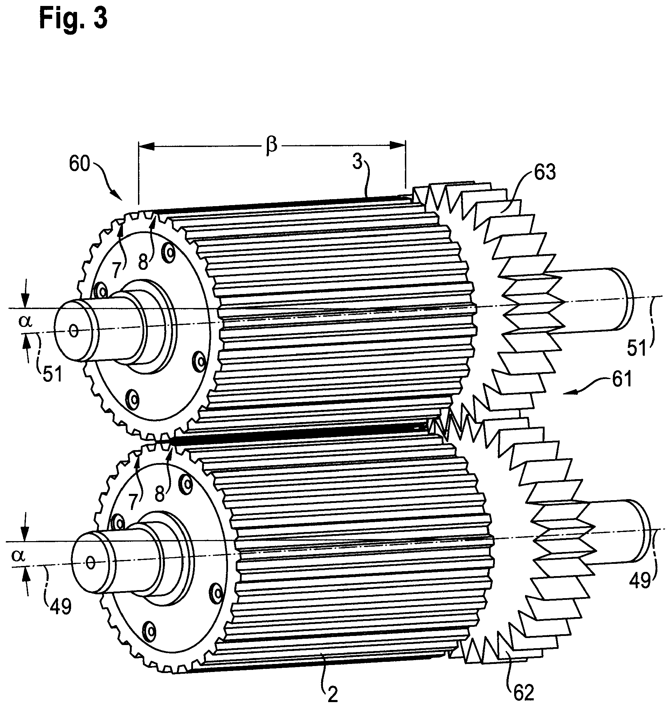

Dazu ist in einer weiteren Ausführungsform der Erfindung vorgesehen, dass der Quetschwalzengranulator eine Synchronisationseinrichtung aufweist, welche die Rotation des Quetschwalzenpaares derart synchronisiert, dass die Zahnkopfbereiche bei einem Quetschvorgang einander gegenüber liegen. Diese Synchronisationseinrichtung kann zwei sich kämmende Zahnräder aufweisen, die auf den Wellen der Quetschwalzen angeordnet sind, wie es Figur 3 zeigt. Alternativ können auch gegenläufig wirkende Zahnriemen entsprechend ausgebildete Zahnriemenscheiben kämmen. Andererseits ist es auch möglich, ein Drehrichtungsumkehrgetriebe mit dem Übersetzungsverhältnis 1:1 zwischen den Wellen der Quetschwalzen vorzusehen.

Möglich ist auch eine Ausführungsform der Erfindung, bei welcher die jeweiligen Quetschwalzen durch jeweilige Einzelantriebe angetrieben werden, welche entsprechend synchronisiert sind. Solche Einzelantriebe an sich sind beispielsweise aus dem Patent US 6,312,225 bekannt.

In einer weiteren Ausführungsform der Erfindung weist der Quetschwalzengranulator eine Zufuhrvorrichtung zum Zuführen eines Hüllschlauchs mit coextrudierter Füllmasse auf. Bei dem erfindungsgemäßen Quetschwalzengranulator kann folglich nicht nur eine Mehrschichtigkeit einer Außenhülle durch Coextrusion von Hüllmaterialien erreicht werden, sondern vor allem wird für einen vorzugsweise einschichtigen Hüllschlauch, mit dem zusammen eine Füllmasse coextrudiert ist, in dem Quetschwalzenpaar aus verzahnter Andruckwalze und verzahnter Quetschwalze mit der speziellen Ausbildung des Zahnkopfbereichs in drei Quetschzonen eine Vorrichtung bereitgestellt, die Granulatkissen füllen und gleichzeitig mediendicht verschließen kann. Dabei weisen die Granulatkissen Portionen der Füllmasse auf, die von einer Außenhülle aus dem Material des Hüllschlauchs umhüllt sind.

Ein Vorteil eines derartigen Quetschwalzengranulators mit einem extrudierten Hüllschlauch und der in den Hüllschlauch eingeschlossenen coextrudierten Füllmasse erreicht einen Massendurchsatz und Ausstoß an Granulatkissen, der mit herkömmlichen Anlagen zum Herstellen und Befüllen von Behältnissen nicht erreichbar ist.

Insbesondere können so auch relativ kleine Granulatkissen mit einem Volumen von beispielsweise weniger als 1 $cm^3$ erfindungsgemäß herstellbar sein.

Um das Einbringen von Dichtnähten weiter zu verbessern, weist in einer weiteren Ausführungsform der Erfindung der Zahnkopfbereich eine gefaste Eingangskante zu der Eingangsquetschzone und eine gefaste Ausgangskante von der Ausgangsquetschzone auf. Durch diese angebrachten Fasen an der Eingangskante und der Ausgangskante wird das Ausbilden von Dichtnähten dahingehend verbessert, dass ein Beschädigen des extrudierten Hüllschlauchs mit coextrudierter Füllmasse durch die Eingangskanten oder die Ausgangskanten der Quetschzonen vermieden wird.

In einer weiteren Ausführungsform der Erfindung ist es vorgesehen, dass die Mittenquetschzone des Zahnkopfbereichs als Sollbruchnahtprofil eine Abflachung aufweist. Diese Abflachung, die einen minimalen Abstand zur dort umgebenden Zylinderoberfläche der Andruckwalze aufweist, ermöglicht eine Sollbruchnaht von minimaler Stärke zwischen zwei aneinanderhängenden Granulatkissen.

Bei einer weiteren Ausführungsform der Erfindung weist die Mittenquetschzone des Zahnkopfbereichs als Sollbruchnahtprofil eine Stufe auf. Eine derartige Stufe mit minimalem Abstand der Walzen des Quetschwalzenpaares wirkt wie eine Schneidkante, so dass bei geringster Belastung diese Sollbruchnaht für ein Trennen von aneinanderhängenden Granulatkissen geeignet ist.

Weiterhin ist es vorgesehen, dass die Mittenquetschzone des Zahnkopfbereichs einen über die Eingangsquetschzone und die Ausgangsquetschzone herausragenden Stegquerschnitt aufweist. Ein derartiger Stegquerschnitt verringert zusätzlich den Abstand zwischen den Walzen des Quetschwalzenpaares, so dass auch in dieser Ausführungsform die Mittenquetschzone wie ein Trennmesser wirken kann, das bereits bei geringer Belastung der entstehenden Sollbruchnaht ein Trennen der Granulatkissen ermöglicht.

Weiterhin ist es vorgesehen, dass die Ausgangsquetschzone länger ist als die Eingangsquetschzone. Daraus ergibt sich der Vorteil, dass die Ausgangsquetschnaht breiter oder länger ist als die Eingangsquetschnaht, so dass die Gefahr der Beschädigung der Ausgangsdichtnaht beim Trennen eines Granulatkissens von einem nachfolgenden Granulatkissen noch während der Quetschphase der Quetschwalze deutlich vermindert ist.

Weiterhin ist es vorgesehen, dass die Walzen des Quetschwalzenpaares eine Metalllegierung aufweisen, wobei die Oberflächen der Zahnkopfbereiche verschleißfeste Oberflächen, vorzugsweise Oberflächen von Hartmetallbeschichtungen oder Keramikbeschichtungen oder gehärtete Oberflächen aufweisen. Eine Härtung der Oberflächen bzw. der Zahnkopfbereiche wird vorzugsweise mittels eines induktiven Härtungsverfahrens erreicht, bei dem die Oberflächen der Zahnkopfbereiche induktiv erhitzt und anschließend abgekühlt werden können. Andererseits ist es auch möglich, eine verbesserte Härte dadurch zu erreichen, dass Hartmetallbeschichtungen oder Keramikbeschichtungen wie Nitrid- oder Karbidschichten auf den Oberflächen vorgesehen werden. Je härter die Oberflächen ausgebildet sind, umso präziser können die definierten unterschiedlichen Abstände der drei Quetschzonen sich zwischen den Granulatkissen ausbilden.

Für den extrudierten Hüllschlauch sind thermoplastische Kunststoffe der Gruppe Polyamid (PA), Polypropylen (PP), Low Density Polyethylen (LDPE), Copolymer (COP) oder Ethylen-Vinylalkohol-Copolymer (EVOH), Ethylen-Vinyl-Acetat Copolymer (EVA) und Mischprodukte derselben, die Anteile von Polyolefinwachsen, Polyethylenwachsen, Polypropylenwachsen oder Fettsäurederivate aufweisen, von Vorteil, da derartige Hüllschläuche nicht nur ein einziges Material aufweisen, sondern mehrere Materialien, die beispielsweise einen erhöhten Schutz gegen Feuchtigkeit ermöglichen und durch Coextrusion miteinander zu einem mehrschichtigen Hüllschlauch verbunden sein können.

Soll mehr als nur ein Zahnkopfbereich auf der Breite B der Quetschwalze den minimalen Abstand zur zylindrischen Andruckwalze aufweisen, so kann dieses durch einen Faktor, wie vorzugsweise 5 erreicht werden, so dass ein bevorzugter Bereich des Spiralwinkels $\alpha$ zwischen

$$\arctan \pi D/nB \leq \alpha \leq 5 \arctan \pi D/nB \text{ liegt.}$$

Auch die maximalen Abmessungen der Granulatkissen sind von der Geometrie der Verzahnung und der Breite der Quetschwalze abhängig, so dass sich für die Länge l ein Quotient aus $\pi D/n$ ergibt und für die Breite b der Granulatkissen einerseits ein Quotient aus B/N maßgeblich ist, wobei B die Breite der Quetschwalze und N die Anzahl von parallel der Quetschwalze zugeführten Hüllschläuchen mit coextrudierter Füllmasse ist und andererseits der Außendurchmesser d des Hüllschlauchs, mit dem eine Breite b der Granulatkissen von

$$b = \pi d/2$$

erreicht werden kann.

Weiters betrifft die Erfindung eine Granulieranlage mit einem Quetschwalzengranulator, wobei die Granulieranlage eine Extrusionsvorrichtung zum Coextrudieren von Füllmassen in Hüllschläuchen zu Kunststoffsträngen aufweist. Außerdem weist die Granulieranlage den Quetschwalzengranulator mit Zufuhrvorrichtung zum Zuführen der Kunststoffstränge zu einem Quetschwalzenpaar aus einer verzahnten Andruckwalze und einer verzahnten Quetschwalze, und eine Auffangvorrichtung zur Aufnahme der von dem Quetschwalzenpaar zu Granulatkissen portionierten Kunststoffstränge auf, wobei die Granulatkissen eine Außenhülle aufweisen, die mit einer Füllmasse gefüllt ist. Schließlich koordiniert eine Steuer- und Regelvorrichtung der Granulieranlage dieser Ausführungsform den Antrieb der Quetschwalze mit der Extrusionsgeschwindigkeit der Kunststoffstränge, und eine Synchronisationseinrichtung synchronisiert die Rotation des Quetschwalzenpaares derart, dass die Zahnkopfbereiche bei einem Quetschvorgang einander gegenüber liegen.

Eine derartige Granulieranlage hat den Vorteil, dass die Zuführung der Hüllschläuche mit Füllmassen in Form eines Kunststoffstrangs der Extrusionsgeschwindigkeit einer zugehörigen Extrusionsvorrichtung über den Antrieb der Quetschwalze unter Synchronisation der Synchronisierungseinrichtung in allen Betriebsphasen anpassbar ist. An dem Ausgang der Extrusionsvorrichtung kann bis zum Eingangsspalt des Quetschwalzenpaares deshalb ein relativ kurzes Verbindungsstück beispielsweise in Form einer den Kunststoffstrang temperierenden Gleitstrecke vorgesehen werden.

Auf dieser Gleitstrecke können mehrere parallel extrudierte Kunststoffstränge auf eine Verarbeitungstemperatur, die für ein Zusammenpressen des Hüllschlauchs im Bereich der Eingangsquetschzone zu Eingangsdichtnähten und in der Ausgangsquetschzone zur Ausbildung von Ausgangsdichtnähten erforderlich ist, temperiert werden. Diese optimierte Verarbeitungstemperatur kann durch Einleiten von temperiertem Wasser in die Zufuhrvorrichtung erfolgen oder durch entsprechende Optimierung der Temperierung des Quetschwalzenpaares. Auch ist es möglich, die parallel verlaufenden Stränge auf einer Zufuhrstrecke durch ein entsprechend temperiertes Wasserbad zu leiten. Dabei kann auch eine leicht zu kontrollierende Verweilzeit in Abhängigkeit der über die Zufuhrvorrichtung eingestellten Zufuhrgeschwindigkeit einstellbar sein.

Bei kurzen Zufuhrstrecken zwischen Extrusionsvorrichtung und Quetschwalzenpaar kann das Wasserbad der Kühlung der Kunststoffstränge auf die erforderliche Schweißtemperatur beim Quetschvorgang dienen, während bei langen Zufuhrstrecken von der Extrusionsvorrichtung zu den Quetschwalzen kann ein Aufheizen beispielsweise durch ein Wasserbad auf die Verarbeitungstemperatur zum Verschweißen wie beispielsweise auf 40°C vorgesehen werden. Neben einer geeigneten Verarbeitungstemperatur hängt eine mediendichte Verschweißung von dem Anpressdruck, der Erweichungstemperatur des Hüllmaterials, der Materialdicke und der Verweilzeit in der Temperierzone sowie unter Schweißbedingungen ab.

Eine bevorzugte Verwendung des Quetschwalzengranulators, wie er oben beschrieben ist, bildet die Herstellung von Granulatkissen mit pulverförmigen, flüssigen, zähviskosen oder plastisch verformbaren Füllmassen. Dabei wird der erfindungsgemäße Quetschwalzengranulator zur Portionierung von pharmazeutischen, medikamentösen, kosmetischen, adhäsiven oder steril zu verpackenden Füllmassen in Granulatkissen mit Außenhüllen aus thermoplastisch verformbaren Kunststoffen mit oder ohne Anteilen von Wachsen eingesetzt. Als adhäsive Füllmassen können vorzugsweise Schmelzklebstoffe in Granulatkissen portioniert werden. Als Material für die Außenhüllen wird zum Einhüllen des Schmelzklebstoffs ein Material eingesetzt, das eine äußere Oberfläche des Granulatkissens ausbildet, die nicht adhäsiv ist.

Die Erfindung wird im Folgenden anhand der beispielhaft erläuterten Ausführungsformen näher beschrieben.

Figur 1 zeigt eine Prinzipskizze eines Quetschgranulators in einer Granulieranlage zur Herstellung von Granulatkissen;

Figur 2 zeigt einen schematischen Querschnitt durch einen Ausschnitt eines Quetschgranulators;

Figur 3 zeigt eine schematische perspektivische Ansicht eines Quetschwalzenpaares des Quetschgranulators;

Figur 4 zeigt eine schematische Kontur eines Zahnkopfbereichs einer der Walzen des Quetschwalzenpaares;

Figur 5 zeigt eine schematische Kontur eines Zahnfußbereichs einer der Walzen des Quetschwalzenpaares gemäß Figur 4;

Figur 6 zeigt eine alternative schematische Kontur eines Zahnkopfbereichs einer der Walzen des Quetschwalzenpaares;

Figur 7 zeigt eine weitere Modifikation der Kontur des Zahnkopfbereichs einer der Walzen des Quetschwalzenpaares;

Figur 8 zeigt eine weitere Alternative der Kontur des Zahnkopfbereichs einer der Walzen des Quetschwalzenpaares;

Figur 9 zeigt mit den Figuren 9a bis 9f Fertigungsphasen in einem Zahnkopfbereich eines Quetschwalzenpaares aus einer verzahnten Andruckwalze und einer verzahnten Quetschwalze.

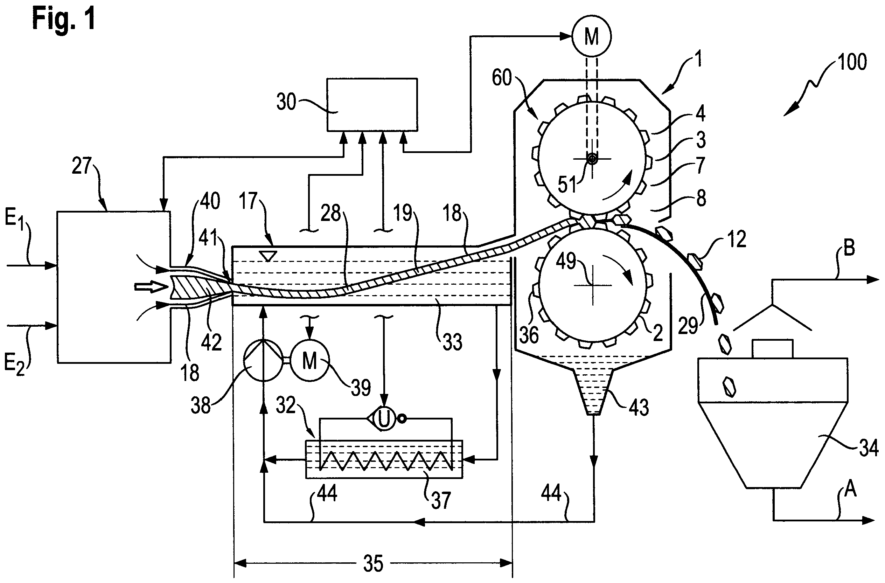

Figur 1 zeigt eine Prinzipskizze eines Quetschgranulators 1 in einer Granulieranlage 100 zur Herstellung von Granulatkissen 12. Die Granulieranlage 100 weist eine Extrusionsvorrichtung 27, eine Zufuhrstrecke 35 und den Quetschgranulator 1 auf. Die Extrusionsvorrichtung 27 coextrudiert eine Füllmasse 19 in einen Hüllschlauch 18 zu einem Kunststoffstrang 28. Dieser Kunststoffstrang 28 wird in einer Zufuhrvorrichtung 17 auf einer Zufuhrstrecke 35 temperiert und dem Quetschgranulator 1 zugeführt.

Der Quetschgranulator 1 weist im Wesentlichen eine Andruckwalze 2 und eine verzahnte Quetschwalze 3 auf, die von einem Antrieb 31 angetrieben wird. Die Quetschwalze 3 wälzt sich mit ihrer Verzahnung 4 auf einer Oberfläche 36 der Andruckwalze 2 derart ab, dass unter Ausbildung eines minimalen Abstands a in dem aus einem Hüllschlauch 18 mit einer coextrudierten Füllmasse 19 gefüllte Granulatkissen 12 portioniert werden.

Die gefüllten Granulatkissen 12 werden über eine Auffangvorrichtung 29 einer Trockenvorrichtung 34 zugeführt, aus der die getrockneten und befüllten Granulatkissen 12 in Pfeilrichtung A ausgegeben werden und in Pfeilrichtung B die feuchtigkeitshaltige Luft in der Art eines Zyklon-Flüssigkeitsabscheiders abgeführt wird.

In der Zufuhrvorrichtung 17 ist auf der Zufuhrstrecke 35 eine Temperiervorrichtung 32 angeordnet, die durch ein Wasserbad 33, durch das der Kunststoffstrang 28 geleitet wird, eine Temperierung des Hüllschlauchs 18 ermöglicht. Die Temperatur, die der Hüllschlauch 18 aus einem thermoplastischen Material annehmen soll, dient der Herstellung einer Schweißnaht in einem Spalt zwischen einem Zahnkopfbereich 8 der Quetschwalze 3 und der Oberfläche 36 der Andruckwalze 2. Der Zahnkopfbereich 8 weist eine Mittenquetschzone auf, die einen minimalen Abstand a zu der Andruckwalze 2 ausbildet und derart gestaltet ist, dass sich in der Mittenquetschzone ein Sollbruchnahtprofil zwischen mediendichten Schweißnähten des Hüllschlauchs 18 ausbildet, so dass die sich bildenden Granulatkissen 12 aus einer Außenhülle und einer Füllmasse trennbar sind.

Die Temperiervorrichtung 32 für ein Temperieren des Wasserbads 33 weist einen Wärmetauscher 37 auf, der die notwendige Kühl- oder Heizenergie zur Temperierung des Wasserbades 33 liefert, wobei eine Pumpe 38, angetrieben von einem Motor 39, den Kreislauf zwischen dem Wasserbad 33 und dem Wärmetauscher 37 aufrechterhält.

Zur Versorgung der Extrusionsvorrichtung 27 mit dem Material für den Hüllschlauch 18 weist diese einen Eingang $E_1$ auf, während das Füllmaterial über den Eingang $E_2$ der Extrusionsvorrichtung 27 zugeführt wird. Am Ausgang der Extrusionsvorrichtung 27 ist eine Coextrusionsdüse 40 angeordnet, die einen Ringspalt 41 zur Extrusion eines Hüllschlauchs 18 aufweist. Im Zentrum 42 der Coextrusionsdüse 40 kann das Füllmaterial 19 coextrudiert werden. Ein derartiges Füllmaterial kann sowohl pulverförmig als auch flüssig sowie schmelzflüssig der Coextrusionsdüse 40 über den Eingang $E_2$ zugeführt werden. Vorzugsweise wird als Füllmaterial 19 ein Schmelzklebstoff coextrudiert.

Die in Figur 1 gezeigte Granulieranlage 100 weist darüber hinaus eine Steuer- und Regeleinheit 30 auf, die den Antrieb 31 der Quetschwalze 3 mit der Extrusionsgeschwindigkeit der Extrusionsvorrichtung 27 koordiniert und gleichzeitig die Temperierung des Kunststoffstrangs 28 im Bereich der Zufuhrstrecke 35 der Zufuhrvorrichtung 17 regelt.

Das temperierende Wasser kann über nicht gezeigte Zuleitungen auch der Quetschwalze 3 zur Temperierung der Quetschwalze zugeführt werden und über einen Wasserauslass 43 des Quetschgranulators 1 in den Kreislauf des temperierenden Wassers über die Rückleitung 44 zugeführt werden.

Anstelle der hier gezeigten Auffangvorrichtung 29 für die Granulatkissen 12, die von der Auffangvorrichtung 29 der Trockenvorrichtung zugeführt werden, können die Granulatkissen 12 auch in einem Rohrsystem mit einem Wasserstrom zu einem nicht gezeigten Wasserabscheider und anschließend zu der hier gezeigten Trockenvorrichtung 34 geführt werden.

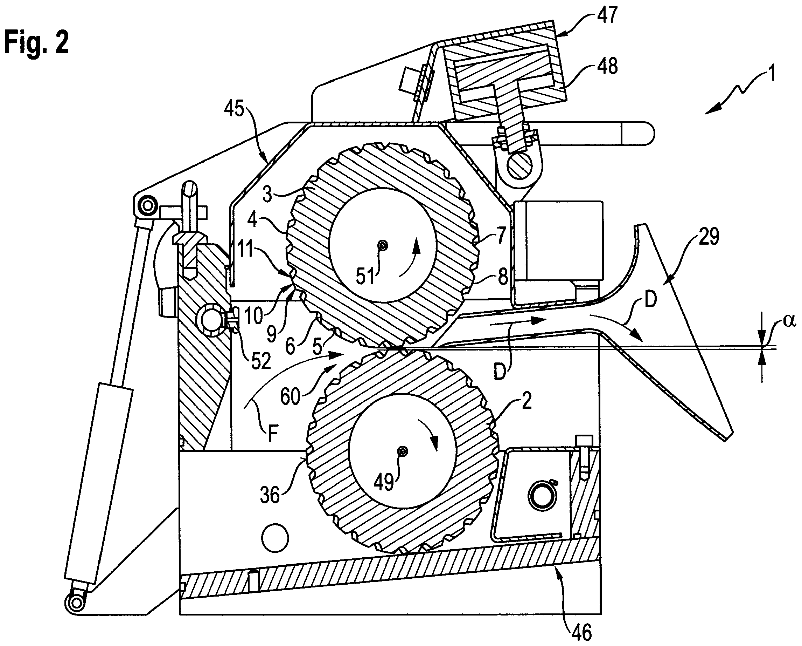

Figur 2 zeigt einen schematischen Querschnitt eines Quetschgranulators 1. Der Quetschgranulator 1 weist zwei Gehäusehälften 45 und 46 auf, wobei eine obere Gehäusehälfte 45 gegenüber einer unteren Gehäusehälfte 46 schwenkbar angeordnet ist. Dabei kann die untere Gehäusehälfte 46 auf einem Maschinengestell angeordnet sein. In der unteren Gehäusehälfte 46 ist drehbar die zylindrische Andruckwalze 2 gelagert, während in der oberen Gehäusehälfte 45 die angetriebene mit einer Verzahnung 4 versehene Quetschwalze 3 angeordnet ist.

Zusätzlich weist die obere Gehäusehälfte 45 einen Andruckmechanismus 47 auf, mit dem im geschlossenen Zustand des Gehäuses die Quetschwalze 3 gegenüber der Andruckwalze 2 unter Änderung eines minimalen Abstands a oder unter Änderung eines Anpressdrucks zwischen der zylindrischen Oberfläche 36 der Andruckwalze 2 und den Zahnkopfbereichen 8 der Quetschwalze 3 mittels eines Hydraulik- oder Pneumatikzylinders 48 variiert werden können. Mit dem Andruckmechanismus 47 können die Quetschbereiche und ihre mögliche Quetschdicke an das jeweilige Material des Hüllschlauchs für eine optimale Herstellung von Dichtnähten sowie von Sollbruchprofilen angepasst werden. Anstelle des gezeigten Hydraulik- oder Pneumatikzylinders 48 kann auch ein elektromechanischer Aktuator eingesetzt werden.

Die Achsen 49 und 51 der Andruckwalze 2 bzw. der Quetschwalze 3 sind achsparallel in den Gehäusehälften 45 und 46 gelagert. Die Quetschwalze 3 weist eine Verzahnung 4 auf, die einen Zahnfußbereich 7 und einen Zahnkopfbereich 8 aufweist. Der Zahnkopfbereich 8 weist drei Quetschzonen 9, 10 und 11 auf, wie es in den weiteren Figuren im Detail gezeigt wird. Die Quetschzonen 9, 10 und 11 weisen eine Eingangsquetschzone 9, eine Mittenquetschzone 10 und eine Ausgangsquetschzone 11 auf. Die Mittenquetschzone 10 ist zwischen der Eingangsquetschzone 9 und der Ausgangsquetschzone 11 angeordnet und definiert den geringsten Abstand a zwischen der Quetschwalze 3 und der Andruckwalze 2 bei feststehendem Andruckmechanismus 47. Dieser geringste Abstand hängt von dem entsprechenden Anpressdruck zwischen der Mittenquetschzone 10 und der zylindrischen Oberfläche der Andruckwalze, der Verarbeitungstemperatur und von den Materialeigenschaften, wie beispielsweise Materialstärke und Plastizität bei der Verarbeitungstemperatur ab.

Weiterhin weist dieser Querschnitt durch den Quetschgranulator 1 einen Auffangtrichter der Auffangvorrichtung 29 auf, der die in Figur 1 gezeigten Granulatkissen in Pfeilrichtung D weiterleitet, wenn in Pfeilrichtung F entsprechende Kunststoffstränge aus einem Hüllschlauch und einer Füllmasse dem Quetschwalzenpaar 60 in dem Spaltbereich zugeführt werden. Außerdem ist in der unteren Gehäusehälfte 46 eine Wasserstrahldüse 52 angeordnet, die temperiertes Wasser auf den Quetschspalt richtet, um den Schweißprozess bei der Bildung von Dichtnähten zu unterstützen.

Figur 3 zeigt eine schematische perspektivische Ansicht eines Quetschwalzenpaares 60 des Quetschgranulators wie er in Figur 1 und 2 zu sehen ist. Die Breite B des Quetschwalzenpaares 60 ist derart dimensioniert, dass gleichzeitig mehrere Kunststoffstränge parallel zu Granulatkissen verarbeitet werden können. Dabei ist die Verzahnung 4 der Quetschwalzen 2 und 3 als Schrägverzahnung ausgebildet mit einem sogenannten Spiralwinkel $\alpha$ in Bezug auf die Ausrichtung der Quetschwalzenachsen 49 bzw. 51.

In dieser beispielhaften Ausführungsform wird eine exakte Synchronisierung der Rotation der Walzen 2 und 3 durch eine Synchronisationseinrichtung 61 erreicht, die ein erstes Synchronisationszahnrad 62, das auf der Walzenachse 49 der Walze 2 mit rotiert, aufweist und ein zweites Synchronisationszahnrad 63, das auf der Walzenachse 51 der Walze 3 mit rotiert, aufweist, wobei die Synchronisationszahnräder 62 und 63 derart dimensioniert und angeordnet sind, dass sie miteinander kämmen.

Sofern der minimale Abstand a der Walzen zueinander verändert wird, so würde sich auch in der schematischen Darstellung der Figur 3 eine Veränderung der Eingriffstiefe im Bereich der kämmenden Synchronisationszahnräder 62, 63 ergeben, was beispielsweise durch Schrägverzahnung der entsprechenden Zahnräder (in der beispielhaft schematischen Darstellung als Stirnräder dort nicht zu sehen) in gewisser Größenordnung kompensiert werden könnte. Denkbar ist auch eine Synchronisationseinrichtung, welche über Zahnriemen oder synchronisierte Einzelantriebe erfolgen könnte (nicht dargestellt).

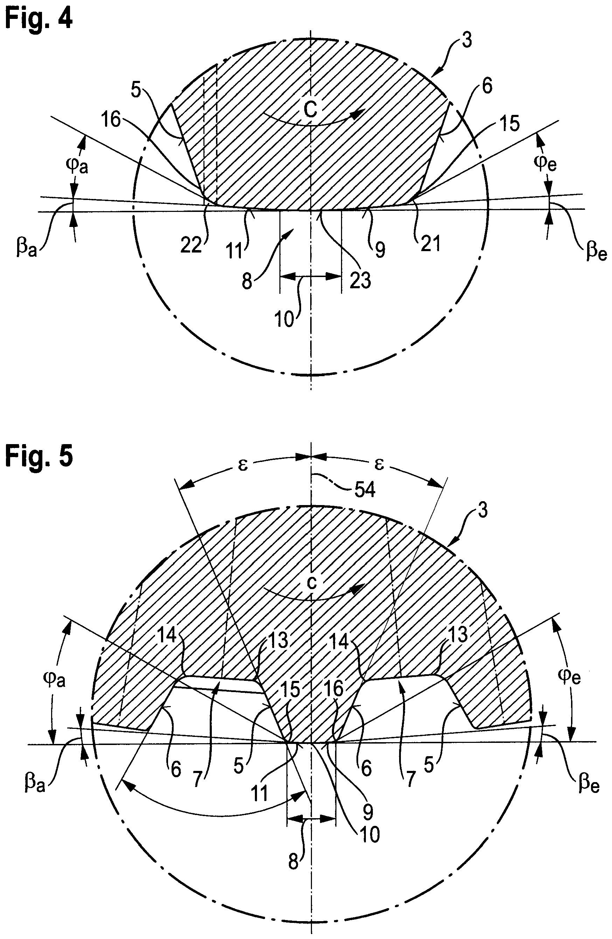

Figur 4 zeigt eine schematische Kontur eines Zahnkopfbereichs einer der Walzen des Quetschwalzenpaares, wobei die Pfeilrichtung C die Drehrichtung beispielsweise der Quetschwalze 3 beschreibt. Der Zahnkopfbereich 8 liegt zwischen einer in Drehrichtung C ansteigenden Zahnflanke 6 und einer in Drehrichtung abfallenden Zahnflanke 5 der Verzahnung 4 der Quetschwalze 3. Die Eingangsquetschzone 9 beginnt mit einem Ende 15 der ansteigenden Zahnflanke 6, die an dem Ende 15 eine gefaste Eingangskante 21 mit einem Fasenwinkel $\varphi_e$ aufweist. Der Fasenwinkel $\varphi_e$ kann zwischen 45° und 15° liegen. Die Ausgangsquetschzone 11 endet an einem Anfang 16 einer abfallenden Zahnflanke 5, wobei der Anfang 16 eine gefaste Ausgangskante 22 mit einem Fasenwinkel $\varphi_a$ zwischen 45° und 15° aufweist, wobei $\varphi_e$ und $\varphi_a$ ungleiche Beträge aufweisen können.

Die gefasten Eingangskanten 21 und Ausgangskanten 22 sorgen für eine schonende Quetschverschweißung des Hüllschlauchs beim Portionieren desselben. Zwischen der Eingangsquetschzone 9 und der Ausgangsquetschzone 11 liegt eine Mittenquetschzone 10, die mit ihrer Abflachung 23 in dem gesamten Bereich der Mittenquetschzone 10 einen gleichbleibenden geringsten Abstand zur Andruckwalze definiert. Die Eingangsquetschzone 9 ist von der Eingangskante 21 zu der Mittenquetschzone 10 derart ausgebildet, dass sich der Abstand zu der Andruckwalze graduell vermindert. Dieses wird dadurch erreicht, dass in dieser Ausführungsform der Erfindung der Anstiegswinkel $\beta_e$ von der Eingangskante 21 bis zur Mittenquetschzone 10 für die Eingangsquetschzone 9 zwischen 2° und 8°, vorzugsweise zwischen 3° und 5° liegt. In analoger Weise vergrößert sich von der Mittenquetschzone 10 ausgehend der Abstand zu der Andruckwalze in der Ausgangsquetschzone 11, für die in dieser Ausführungsform der gleiche Betrag für den Abfallwinkel $\beta_a$ mit $\beta_a = \beta_e$ vorgesehen ist, was jedoch nicht zwingend erforderlich ist.

Die Mittenquetschzone 10 mit ihrem minimalen Abstand a zu der Andruckwalze bildet beim Portionieren des Hüllschlauchs mit coextrudierter Füllmasse ein füllmassenfreies Sollbruchprofil aus, das je nach Einstellung des Andruckmechanismus 47, der in Figur 2 gezeigt wird, Bruchteile von Millimetern oder wenige Millimeter betragen kann.

Figur 5 zeigt eine schematische Kontur eines Zahnfußbereichs einer der Walzen des Quetschwalzenpaares gemäß Figur 4 am Beispiel der Quetschwalze 3 im Bereich von Zahnfußbereichen 7. Ein derartiger Zahnfußbereich 7 reicht bei einer Drehrichtung in Pfeilrichtung C von dem Ende 13 einer abfallenden Zahnflanke 5 bis zu dem Anfang 14 einer ansteigenden Zahnflanke 6. Der Zahnfußbereich 7 kann mehrere Millimeter bis zu wenigen Zentimetern aufweisen und liegt zwischen einer abfallenden und einer ansteigenden Zahnflanke 5 bzw. 6. Außerdem kann ein Radius von 1 mm bis 3 mm im Bereich des Endes 13 der abfallenden Zahnflanke 5 sowie im Bereich des Anfangs 14 der ansteigenden Zahnflanke 6 vorgesehen werden, um Mikrorisse durch Kerbwirkung der Übergänge zwischen den Zahnflanken 5 und 6 zum Zahnfußbereich 7 zu vermeiden.

Die Zahnflanken bilden zur Mittellinie 54 des Zahnkopfbereichs 8 einen Flankenwinkel $\varepsilon$ aus, der zwischen 10° und 35°, vorzugsweise zwischen 15° und 25° liegen kann. Die Kontur des Zahnfußbereichs 7 mit der Kontur der ansteigenden bzw. abfallenden Zahnflanken 5 bzw. 6 in Zusammenwirken mit der zylindrischen Oberfläche der Andruckwalze bilden den maximal möglichen Querschnitt eines durch den Quetschgranulator herstellbaren Granulatkissens aus einer Außenhülle, die von einem Füllmaterial aufgefüllt ist.

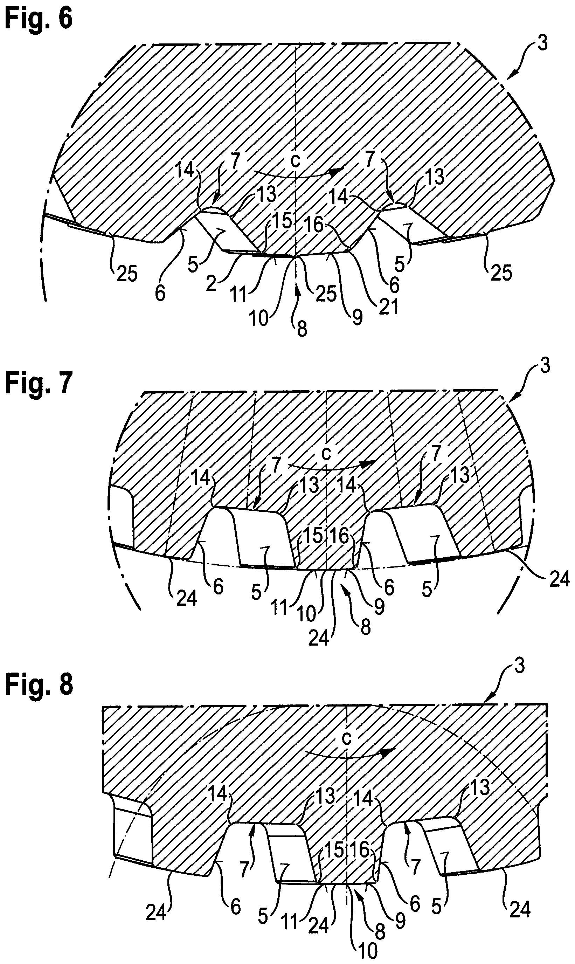

Die in dieser Ausführungsform der Figuren 4 und 5 gezeigte gleich bleibend von der Andruckwalze beabstandete Mittenquetschzone 10 wird nun in den weiteren Ausführungsformen der Erfindung, die in den Figuren 6 bis 8 gezeigt werden, variiert.

Figur 6 zeigt eine alternative schematische Kontur eines Zahnkopfbereichs 8 einer der Walzen des Quetschwalzenpaares am Beispiel der Quetschwalze 3. Komponenten mit gleichen Funktionen wie in den Figuren 4 und 5 werden mit gleichen Bezugszeichen gekennzeichnet und nicht extra erörtert.

Der Unterschied zu der Ausführungsform gemäß den Figuren 4 und 5 besteht darin, dass in Figur 6 die Mittenquetschzone einen Stegquerschnitt 25 aufweist, der über das Niveau der Eingangsquetschzone 9 und der Ausgangsquetschzone 11 hinausragt und damit einen minimalen Abstand zu der zylindrischen Oberfläche der Andruckwalze definiert. Dieser Stegquerschnitt 25 der Mittenquetschzone kann wie bisher ein Sollbruchnahtprofil in den Hüllschlauch einquetschen oder sogar derart ausgebildet sein, dass er eine Trennschneide bildet, welche die Granulatkissen voneinander trennt.

Figur 7 zeigt eine weitere Modifikation der Kontur des Zahnkopfbereichs 8 einer der Walzen des Quetschwalzenpaares am Beispiel der Quetschwalze 3. Während sowohl eine geringfügig modifizierte Eingangsquetschzone 9 und Ausgangsquetschzone 11 vorgesehen sind, ist in der Mittenquetschzone 10 des Zahnkopfbereichs 8 eine scharfe Stufe 24 beim Übergang von der Eingangsquetschzone 9 zu der Mittenquetschzone 10 angeordnet. Mit dieser scharfen Stufe 24 kann ebenfalls ein hochwirksames Sollbruchnahtprofil bis hin zum Abscheren der Granulatkissen erreicht werden. Bei dieser Ausführungsform kann die Ausgangsquetschzone 11 gegenüber der Eingangsquetschzone 9 verlängert sein.

Bevorzugt würden dann auch die Konturen der entsprechenden Zonen der Gegenwalze (hier nicht gezeigt) entsprechend verändert gegenüberliegend ausgebildet sein.

Figur 8 zeigt eine weitere Modifikation der Kontur des Zahnkopfbereichs einer der Walzen des Quetschwalzenpaares am Beispiel der Quetschwalze 3, bei der ähnlich wie in Figur 7 eine scharfe Stufe 24 in der Mittenquetschzone 10 vorgesehen ist, jedoch mit dem Unterschied zu der in Figur 7 gezeigten Ausführungsform, dass diese Stufe 24 am Übergang der Mittenquetschzone 10 zu der Ausgangsquetschzone 11 angeordnet ist. Bei dieser Ausführungsform kann die Eingangsquetschzone 9 gegenüber der Ausgangsquetschzone 11 verlängert sein.

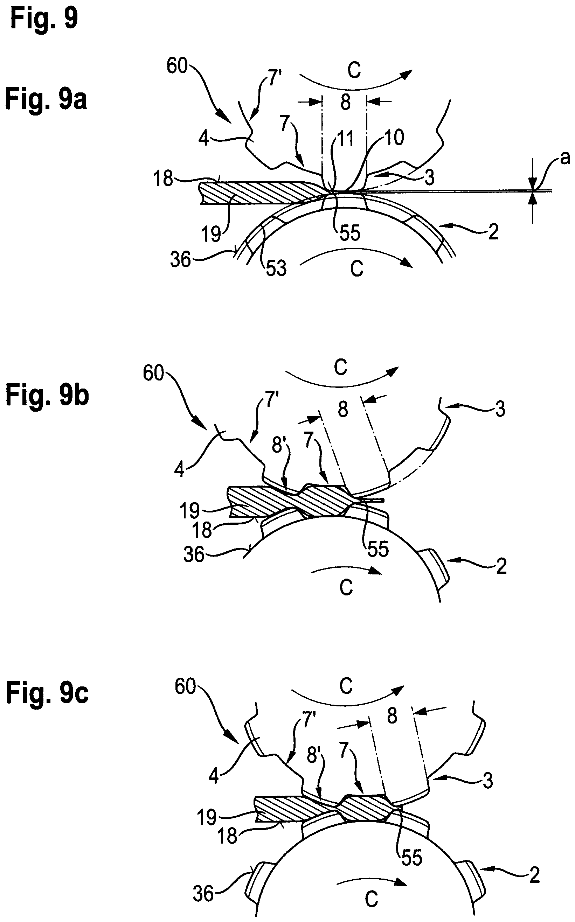

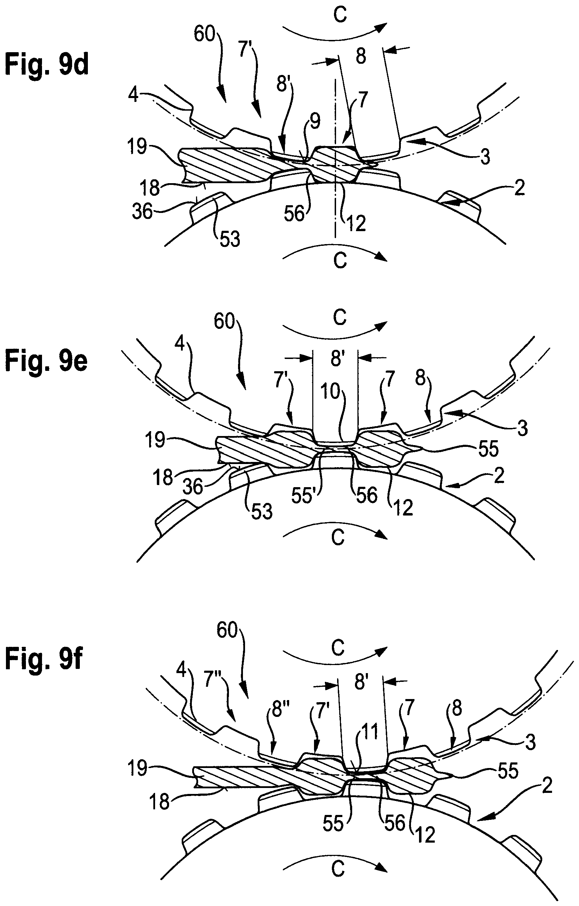

Figur 9 zeigt mit den Figuren 9a bis 9f Fertigungsphasen in einem Zahnkopfbereich 8 eines Quetschwalzenpaares 60 aus einer verzahnten Andruckwalze 2 und einer verzahnten Quetschwalze 3. Die Andruckwalze 2 weist eine verzahnte Oberfläche 36 auf mit Zahnkopfbereichen, die eine gehärtete Metalllegierung oder eine Hartmetallbeschichtung oder Keramikbeschichtung 53 aufweist. Auch die Zahnkopfbereiche 8, 8' und 8" der Quetschwalze 3 sind vorzugsweise durch ein induktives Härteverfahren oberflächengehärtet.

Über den Spalt, der einen minimalen Abstand a zwischen dem Zahnkopfbereich der Andruckwalze 2 und dem Zahnkopfbereich der Quetschwalze 3 ausbildet, wird, wie Figur 9a zeigt, der Anfang eines Hüllschlauchs 18 mit einer Füllmasse 19 unter Ausbildung einer ersten mediendichten Anfangsquetschnaht 55 eines zu bildenden Granulatkissens eingezogen. Dabei wird der Hüllschlauch 18 mit der Füllmasse 19 in Figur 9b von einem nachfolgenden Zahnkopfbereich 8' der Verzahnung 4 wenigstens der Quetschwalze 3 erfasst.

Wie Figur 9c zeigt, wird der Hüllschlauch 18 zunehmend zusammengepresst und dabei die Füllmasse 19 in den Hohlraum zwischen den Fußbereichen der Verzahnungen der beiden Walzen 2 und 3 des Quetschwalzenpaares 60 unter Ausbildung einer die Füllmasse 19 umgebenden Außenhülle gepresst. In der Figur 9d wird schließlich die Eingangsquetschzone 9 des nachfolgenden Zahnkopfbereichs 8' erreicht und eine erste Endquetschnaht 56 in der Eingangsquetschzone 9 für ein erstes Granulatkissen 12 ausgebildet.

Mit der Figur 9e wird der minimale Abstand a wie ihn die Figur 9a zeigt zwischen dem nachfolgenden Zahnkopfbereich 8' und der zylindrischen Oberfläche 36 der Andruckwalze 2 durch die Mittenquetschzone 10 des Zahnkopfbereichs 8' erreicht und damit ein Sollbruchnahtprofil ausgebildet. Beim synchronen Weiterdrehen der Quetschwalzen 2 und 3 in Pfeilrichtung C wandert der Zahnkopfbereich 8' in die Ausgangsquetschzone 11, welche nun in Figur 9f eine mediendichte zweite Anfangsquetschnaht 55' durch Verschweißen für ein nachfolgendes Granulatkissen 12' ausbildet.

In der in Figur 9f gezeigten Phase wird nun die Kontur des Granulatkissens 12' zwischen den Fußbereichen der Verzahnungen der beiden Walzen 2 und 3 des Quetschwalzenpaares 60 und der Kontur, aus den Zahnflanken 5 und 6 und dem Zahnfußbereich 7' der Walzen 2 und 3 fertiggestellt, die nun nahezu den gesamten Zwischenraum zwischen den Fußbereichen der Verzahnungen der beiden Walzen 2 und 3 des Quetschwalzenpaares 60 auffüllt.

Da die Breite der Granulatkissen 12 geringer ist als die Breite B des Quetschwalzenpaares 60 wie es Figur 3 zeigt, können parallel mehrere Hüllschläuche 18, nämlich bis zu N Hüllschläuchen mit $N < 2B/\pi d$ gleichzeitig nebeneinander bzw. parallel zwischen dem Quetschwalzenpaar 60 angeordnet werden, wobei d der Außendurchmesser des Hüllschlauchs ist. Damit kann der Ausstoß des erfindungsgemäßen Quetschgranulators deutlich vervielfacht werden.

**Bezugszeichenliste**

| | |
|---|---|
| 1 | Quetschgranulator |
| 2 | Andruckwalze |
| 3 | verzahnte Quetschwalze |
| 4 | Verzahnung |
| 5 | Zahnflanke (abfallend) |
| 6 | Zahnflanke (ansteigend) |
| 7, 7', 7" | Zahnfußbereich |
| 8, 8', 8" | Zahnkopfbereich |
| 9 | Eingangsquetschzone |
| 10 | Mittenquetschzone |
| 11 | Ausgangsquetschzone |
| 12 | Granulatkissen |
| 13 | Ende einer abfallenden Zahnflanke |
| 14 | Anfang einer ansteigenden Zahnflanke |
| 15 | Ende einer ansteigenden Zahnflanke |
| 16 | Anfang einer abfallenden Zahnflanke |
| 17 | Zufuhrvorrichtung |
| 18 | Hüllschlauch |
| 19 | Füllmasse |
| 21 | Eingangskante mit Fase |
| 22 | Ausgangskante mit Fase |
| 23 | Abflachung |
| 24 | Stufe |
| 25 | Stegquerschnitt |
| 26 | Schrägverzahnung |
| 27 | Extrusionsvorrichtung |
| 28 | Kunststoffstrang |
| 29 | Auffangvorrichtung |
| 30 | Steuer- und Regeleinheit |
| 31 | Antrieb der Quetschwalze |
| 32 | Temperiervorrichtung |
| 33 | Wasserbad |
| 34 | Trockenvorrichtung |
| 35 | Zufuhrstrecke |
| 36 | zylindrische Oberfläche |
| 37 | Wärmetauscher |
| 38 | Pumpe |
| 39 | Motor |
| 40 | Coextrusionsdüse |
| 41 | Ringspalt der Coextrusionsdüse |
| 42 | Zentrum der Coextrusionsdüse |
| 43 | Wasserauslass |
| 44 | Rückleitung |
| 45 | obere Gehäusehälfte |
| 46 | untere Gehäusehälfte |
| 47 | Andruckmechanismus |
| 48 | Hydraulik- oder Pneumatikzylinder |
| 49 | Achse der Andruckwalze |
| 51 | Achse der Quetschwalze |
| 52 | Wasserstrahldüse |
| 53 | Keramikbeschichtung |
| 54 | Mittellinie |
| 55, 55' | Anfangsquetschnaht eines Granulatkissens |
| 56, 56' | Endquetschnaht eines Granulatkissens |
| 60 | Quetschwalzenpaar |
| 61 | Synchronisationseinrichtung |
| 62 | Synchronisationszahnrad |
| 63 | Synchronisationszahnrad |
| 100 | Granulieranlage |
| $\alpha$ | Spiralwinkel bzw. Schrägverzahnungswinkel |
| $\beta$ | Anstiegswinkel |
| $\varphi$ | Fasenwinkel |
| $\varepsilon$ | Flankenwinkel |
| a | minimaler Abstand zu Andruckwalze |
| B | Breite der Quetschwalze |
| d | Außendurchmesser des Zahnfußbereichs |
| D | Außendurchmesser des Zahnkopfbereichs der Quetschwalze |
| l | Länge des Granulatkissens |
| n | Anzahl der Verzahnungen der Quetschwalze |
| N | Anzahl der Hüllschläuche |

**Patentansprüche**

**1.** Quetschwalzengranulator der ein Quetschwalzenpaar (60) aus einer verzahnten Andruckwalze (2) und einer verzahnten Quetschwalze (3) aufweist, wobei die Verzahnung (4) der Andruckwalze (2) und der Quetschwalze (3) Zahnflanken (5, 6) aufweist, die zwischen einem Zahnfußbereich (7) und einem Zahnkopfbereich (8, 8') angeordnet sind, und wobei der Zahnfußbereich (7) einen Außendurchmesser (d) aufweist, der geringer ist als der Außendurchmesser (D) des Zahnkopfbereichs, und wobei wenigstens eine der Walzen (2, 3) des Quetschwalzenpaares (60) in dem Zahnkopfbereich (8, 8') drei Quetschzonen (9, 10, 11) mit einer Mittenquetschzone (10) aufweist, die unterschiedliche Abstände zwischen den Zahnkopfbereichen (8, 8') mit einem minimalen Abstand (a) im Bereich der Mittenquetschzone (10) aufweisen, und wobei die Kontur der Zahnflanken (5, 6) und des Zahnfußbereichs (7) der Walzen (2, 3) des Quetschwalzenpaares (60) einen maximalen Querschnitt von zu formenden Granulatkissen (12) definiert, **dadurch gekennzeichnet, dass** sich der Zahnfußbereich (7) von einem Ende (13) einer abfallenden Zahnflanke (5) zu einem Anfang (14) einer ansteigenden Zahnflanke (6) erstreckt und der Zahnkopfbereich (8) von einem Ende (15) einer ansteigenden Zahnflanke (6) zu einem Anfang (16) einer abfallenden Zahnflanke (5) erstreckt, und wobei die Quetschzonen (9, 10, 11) des Zahnkopfbereichs (8) eine Eingangsquetschzone (9), die in Zufuhrrichtung angeordnet ist, eine Ausgangsquetschzone (11), die in einer Abfuhrrichtung angeordnet ist und die Mittenquetschzone (10), die zwischen Eingangs- und Ausgangsquetschzone (9, 11) angeordnet ist aufweisen, und wobei die Eingangs- und Ausgangsquetschzonen (9, 11) der Verzahnung (4) von den Zahnflanken (6, 7) begrenzt sind, und wobei die Eingangsquetschzone (9) einen zu der Mittenquetschzone (10) hin vermindernden Abstand ($a_9$) und die Ausgangsquetschzone (11) einen sich von der Mittenquetschzone (10) aus vergrößernden Abstand ($a_{11}$) zwischen den Walzen (2, 3) des Quetschwalzenpaares (60) definiert.

**2.** Quetschwalzengranulator nach Anspruch 1, **dadurch gekennzeichnet, dass** ausschließlich eine der beiden Walzen (2, 3) des Quetschwalzenpaares (60) in dem Zahnkopfbereich (8, 8') die drei Quetschzonen aufweist, während die andere der beiden Walzen (2, 3) des Quetschwalzenpaares (60) einen glatten zylindrisch gerundeten Zahnkopfbereich (8, 8') aufweist.

**3.** Quetschwalzengranulator nach Anspruch 1, **dadurch gekennzeichnet, dass** beide Walzen (2, 3) des Quetschwalzenpaares (60) in ihren Zahnkopfbereichen (8, 8') die drei Quetschzonen aufweisen.

**4.** Quetschwalzengranulator nach einem der vorhergehenden Ansprüche, **dadurch gekennzeichnet, dass** der Quetschwalzengranulator eine Synchronisationseinrichtung (61) aufweist, welche die Rotation des Quetschwalzenpaares derart synchronisiert, dass die Zahnkopfbereiche (8, 8') bei einem Quetschvorgang einander gegenüber liegen.

**5.** Quetschwalzengranulator nach einem der vorhergehenden Ansprüche, **dadurch gekennzeichnet, dass** der Quetschwalzengranulator (1) eine Zufuhrvorrichtung (17), zum Zuführen eines Hüllschlauchs (18) mit coextrudierter Füllmasse (19) aufweist, und wobei die zu formenden Granulatkissen (12) Portionen der Füllmasse (19) aufweisen, die von einer Außenhülle aus dem Material des Hüllschlauchs (18) umhüllt sind.

**6.** Quetschwalzengranulator nach einem der vorhergehenden Ansprüche, **dadurch gekennzeichnet, dass** die Eingangsquetschzone (9) zur Ausbildung einer Eingangsdichtnaht und die Ausgangsquetschzone (11) zur Ausbildung einer Ausgangsdichtnaht der Granulatkissen (12) und die Mittenquetschzone (10) zur Ausbildung eines Sollbruchnahtprofils zwischen den Granulatkissen (12) ausgebildet sind.

**7.** Quetschwalzengranulator nach einem der vorhergehenden Ansprüche, **dadurch gekennzeichnet, dass** die Mittenquetschzone (10) des Zahnkopfbereichs (8) als Sollbruchnahtprofil eine Abflachung (23), eine Stufe (24) oder einen über die Eingangsquetschzone (9) und die Ausgangsquetschzone (11) herausragenden Stegquerschnitt (25) aufweist.

**8.** Quetschwalzengranulator nach einem der vorhergehenden Ansprüche, **dadurch gekennzeichnet, dass** die Ausgangsquetschzone (11) länger ist als die Eingangsquetschzone (9).

**9.** Quetschwalzengranulator nach einem der vorhergehenden Ansprüche, **dadurch gekennzeichnet, dass** die Quetschwalze (3) und die Andruckwalze (2) eine Metalllegierung aufweisen, und wobei die Zahnkopfbereiche (8, 8') der Andruckwalze (2) und der Quetschwalze (3) verschleißfeste Oberflächen, vorzugweise gehärtete Oberflächen oder Oberflächen von Hartmetallbeschichtungen oder Keramikbeschichtungen aufweisen.

**10.** Quetschwalzengranulator nach einem der Ansprüche 5 bis 9, **dadurch gekennzeichnet, dass** der Hüllschlauch (18) thermoplastische Kunststoffe der Gruppe Polyamid (PA), Polypropylen (PP), Low Density Polyethylen (LDPE), Copolymer (COP) oder Ethylen-Vinylalkohol-Copolymer (EVOH), Ethylen-Vinyl-Acetat Copolymer (EVA) und Mischprodukte derselben mit Anteilen von Polyolefinwachsen, Polyethylenwachsen, Polypropylenwachsen oder Fettsäurederivaten aufweist.

**11.** Quetschwalzengranulator nach einem der vorhergehenden Ansprüche, **dadurch gekennzeichnet, dass**
die beiden Walzen (2, 3) des Quetschwalzenpaares (60) eine Schrägverzahnung (26) mit einem Schrägverzahnungswinkel $\alpha$ zwischen

$$\arctan \pi D/nB \leq \alpha \leq 5 \arctan \pi D/nB$$

mit D Außendurchmesser der Walzen (2, 3), B Breite der Walzen (2, 3) sowie n Anzahl der auf dem Außenumfang verteilten Verzahnungen (4) der Walzen (2, 3), aufweist.

**12.** Quetschwalzengranulator nach einem der vorhergehenden Ansprüche, **dadurch gekennzeichnet, dass** ein Granulatkissen (12) eine Länge l von

$$l \leq \pi D/n$$

mit n Anzahl der auf dem Außenumfang verteilten Verzahnungen (4) der Quetschwalze (3) und D Außendurchmesser der Quetschwalze (3), sowie eine Breite b von

$$b \leq B/N$$

mit B Breite der Quetschwalze (3) und N Anzahl von parallel der Quetschwalze (3) zugeführten Hüllschläuchen (18) mit coextrudierter Füllmasse (19), aufweist, wobei

$$N \leq 2B/\pi d$$

mit d Außendurchmesser des Hüllschlauchs (18) ist.

**13.** Granulieranlage mit einem Quetschwalzengranulator nach einem der Ansprüche 1 bis 12, **dadurch gekennzeichnet, dass** die Granulieranlage (100) eine Extrusionsvorrichtung (27) zum Coextrudieren von Füllmassen (19) in Hüllschläuche (18) zu Kunststoffsträngen (28), eine Zufuhrvorrichtung (17) zum Zuführen der Kunststoffstränge (28) zu einem Quetschwalzenpaar (60) aus einer verzahnten Andruckwalze (2) und einer verzahnten Quetschwalze (3), und eine Auffangvorrichtung (29) zur Aufnahme der von dem Quetschwalzenpaar (60) zu Granulatkissen (12) portionierten Kunststoffstränge (28) aus einer Außenhülle und einer coextrudierten Füllmasse (19) aufweist, wobei eine Steuer- und Regelvorrichtung des Quetschwalzengranulators (1) den Antrieb der Quetschwalze (3) mit der Extrusionsgeschwindigkeit der Kunststoffstränge (28) koordiniert und eine Synchronisationseinrichtung (61) die Rotation des Quetschwalzenpaares derart synchronisiert, dass die Zahnkopfbereiche (8, 8') bei einem Quetschvorgang einander gegenüber liegen.

**14.** Verwendung des Quetschwalzengranulators (1) nach einem der Ansprüche 1 bis 12 zur Herstellung von Granulatkissen (12) mit pulverförmiger, flüssiger, zähviskoser oder plastisch verformbarer Füllmasse (19).

**15.** Verwendung des Quetschwalzengranulators (1) nach einem der Ansprüche 1 bis 12 zur Portionierung von pharmazeutischen, medikamentösen, kosmetischen, adhäsiven oder steril verpackten Füllmassen (19) in Granulatkissen (12) mit Außenhülle.

## Claims

**1.** Crushing roller granulator with a crushing roller pair (60) comprising a toothed pressure roller (2) and a toothed crushing roller (3), with the toothing (4) on the pressure roller (2) and the crushing roller (3) having tooth flanks (5, 6) disposed between a tooth root section (7) and a tooth head section (8, 8'), and with the tooth root section (7) having an outside diameter (d) which is smaller than the outer diameter (D) of the tooth head section, and wherein at least one of the rollers (2, 3) of the crushing roller pair (60) has, in the tooth head section (8, 8'), three crushing zones (9, 10, 11) with a middle crushing zone (10) having different distances between the tooth head sections (8, 8') with a minimum distance (a) in the region of the middle crushing zone (10), and wherein the contour of the tooth flanks (5, 6) and of the tooth root section (7) of the rollers (2, 3) of the crushing roller pair (60) defines a maximum cross-section of granule sachets (12) to be formed, **characterised in that** the tooth root section (7) extends from one end (13) of a downwardly sloping tooth flank (5) to a start (14) of a rising tooth flank (6) and the tooth head section (8) extends from one end (15) of a rising tooth flank (6) to a start (16) of a downwardly sloping tooth flank (5), and wherein the crushing zones (9, 10, 11) of the tooth head section (8) consist of an input crushing zone (9) disposed in the feeder direction, an output crushing zone (11) disposed in a discharge direction, and the middle crushing zone (10) disposed between input and output crushing zones (9, 11), and wherein the input and output crushing zones (9, 11) of the toothing (4) are limited by the tooth flanks (6, 7), and wherein, between the rollers (2, 3) of the crushing roller pair (60), the input crushing zone (9) defines a distance ($a_9$) which decreases towards the middle crushing zone (10) and the output crushing zone (11) defines a distance ($a_{11}$) which increases from the middle crushing zone (10) outward.

**2.** Crushing roller granulator according to claim 1, **characterised in that** only one of the two rollers (2, 3) of the crushing roller pair (60) has the three crushing zones in the tooth head section (8, 8'), whilst the other of the two rollers (2, 3) of the crushing roller pair (60) has a smooth cylindrically rounded tooth head section (8, 8').

**3.** Crushing roller granulator according to claim 1, **characterised in that** both rollers (2, 3) of the crushing roller pair (60) have the three crushing zones in their tooth head sections (8, 8').

**4.** Crushing roller granulator according to one of the previous claims, **characterised in that** the crushing roller granulator has a synchronisation device (61) which synchronises the rotation of the crushing roller pair in such a manner that the tooth head sections (8, 8') are positioned opposite each other during a crushing process.

**5.** Crushing roller granulator according to one of the previous claims, **characterised in that** the crushing roller granulator (1) has a feeder device (17) for feeding a casing sleeve (18) with coextruded fill mass (19), and wherein the granule sachets (12) to be formed have portions of the fill mass (19) which are encased by an outer casing made from the material of the casing sleeve (18).

**6.** Crushing roller granulator according to one of the previous claims, **characterised in that** the input crushing zone (9) is contrived to form an input sealed seam and the output crushing zone (11) is contrived to form an output sealed seam of the granule sachets (12) and the middle crushing zone (10) is contrived to form a separation profile between the granule sachets (12).

**7.** Crushing roller granulator according to one of the previous claims, **characterised in that** the middle crushing zone (10) of the tooth head section (8) has, as the separation profile, a flat portion (23), a step (24) or a bridge cross-section (25) which projects across the input crushing zone (9) and the output crushing zone (11).

**8.** Crushing roller granulator according to one of the previous claims, **characterised in that** the output crushing zone (11) is longer than the input crushing zone (9).

**9.** Crushing roller granulator according to one of the previous claims, **characterised in that** the crushing roller (3) and the pressure roller (2) have a metal alloy, and wherein the tooth head sections (8, 8') of the pressure roller (2) and the crushing roller (3) have wear-resistant surfaces, preferably hardened surfaces or surfaces of hard-metal coatings or ceramic coatings.

**10.** Crushing roller granulator according to one of claims 5 to 9, **characterised in that** the casing sleeve (18) is made from thermoplastics of the group polyamide (PA), polypropylene (PP), low density polyethylene (LDPE), copolymer (COP) or the copolymer ethylene vinyl alcohol (EVOH), the copolymer ethylene-vinyl acetate (EVA) and mixed products of the same with percentages of polyolefin waxes, polyethylene waxes, polypropylene waxes or fatty acid derivatives.

**11.** Crushing roller granulator according to one of the previous claims, **characterised in that** the two rollers (2, 3) of the crushing roller pair (60) has a helical gearing (26) with an angle $\alpha$ between

$$\arctan \pi D/nB \leq \alpha \leq 5 \arctan \pi D/nB$$

with D outer diameter of the rollers (2, 3), B width of the rollers (2, 3) and n number of the toothings distributed across the outer circumference (4) of the rollers (2, 3).

**12.** Crushing roller granulator according to one of the previous claims, **characterised in that** a granule sachet (12) has a length 1 of

$$l \leq \pi D/n$$

with n number of the toothings (4) of the crushing roller (3) distributed across the outer circumference and D outer diameter of the crushing roller (3), and a width b of

$$b \leq B/N$$

with B width of the crushing roller (3) and N number of casing sleeves (18) positioned parallel to the crushing roller (3) with coextruded fill mass (19), wherein

$$N \leq 2B/\pi d$$

with d outer diameter of the casing sleeve (18).

**13.** Granulating unit with a crushing roller granulator according to one of claims 1 to 12, **characterised in that** the granulating unit (100) has an extrusion device (27) for coextruding fill masses (19) in casing sleeves (18) to plastic strands (28), a feeder device (17) for feeding the plastic strands (28) to a crushing roller pair (60) comprising a toothed pressure roller (2) and a toothed crushing roller (3), and a catching device (29) for receiving the plastic strands (28) as separated by the crushing roller pair (60) into granule sachets (12) comprising an outer casing and a coextruded fill mass (19), wherein a control and regulation device of the crushing roller granulator (1) coordinates the drive of the crushing roller (3) with the extrusion speed of the plastic strands (28) and a synchronisation device (61) synchronises the rotation of the crushing roller pair such that the tooth head sections (8, 8') are positioned opposite each other during a crushing process.

**14.** Use of the crushing roller granulator (1) according to one of the claims 1 to 12 to produce granule sachets (12) with powdery, liquid, highly viscous or plastically formable fill mass (19).

**15.** Use of the crushing roller granulator (1) according to one of the claims 1 to 12 for portioning of pharmaceutical, medicinal, cosmetic, adhesive or aseptically packaged fill masses (19) in granule sachets (12) with outer casing.

## Revendications

**1.** Granulateur presseur à rouleaux présentant une paire de rouleaux pinceurs (60) composée d'un rouleau presseur (2) denté et d'un rouleau pinceur (3) denté, les dentures (4) desdits rouleaux (2, 3) présentant des flancs (5,6) entre une partie de pied de dent (7) et une partie de sommet de dent (8, 8') et le diamètre extérieur (d) de la partie de pied de dent (7) étant inférieur au diamètre extérieur (D) de la partie de sommet de dent, l'un au moins des rouleaux (2, 3) de la paire de rouleaux pinceurs (60) présentant dans la partie de sommet de dent (8, 8') trois zones de pincement (9, 10, 11) dont une zone de pincement centrale (10), les zones de pincement présentant différents écarts entre les parties de sommet de dents (8, 8') et un écart minimal (a) dans la région de la zone de pincement centrale, les contours des flancs de dents (5, 6) et de la partie de pied de dent (7) des rouleaux (2, 3) de la paire de rouleaux pinceurs (60) définissant une section maximale du coussin de granulat (12) à former, **caractérisée en ce que** la partie de pied de dent (7) s'étend de l'extrémité supérieure (13) d'un flanc de dent (5) à l'extrémité supérieure (14) d'un autre flanc de dent (6), tandis que la partie de sommet de dent (8) s'étend de l'extrémité inférieure (15) d'un flanc de dent (6) à l'extrémité inférieure (16) d'un autre flanc de dent (5), les zones de pincement (9, 10, 11) de la partie de sommet de dent (8) présentant une zone de pincement d'entrée (9) dans le sens de l'alimentation, une zone de pincement de sortie (11) dans le sens de l'évacuation et la zone de pincement centrale (10) entre la zone de pincement d'entrée (9) et la zone de pincement de sortie (11), lesdites zones de pincement d'entrée et de sortie (9, 11) des dentures (4) étant délimitées par les flancs de dents (6, 7), la zone de pincement d'entrée (9) définissant un écart ($a_9$) qui se rétrécit en direction de la zone de pincement centrale (10) tandis que la zone de pincement de sortie (11) définit un écart ($a_{11}$) qui s'élargit à partir de la zone de pincement centrale (10) entre les rouleaux (2, 3) de la paire de rouleaux pinceurs (60).

2. Granulateur presseur à rouleaux conforme à la revendication 1 **caractérisé en ce que** l'un uniquement des deux rouleaux (2, 3) de la paire de rouleaux pinceurs (60) présente dans la partie de sommet de dent (8, 8') les trois zones de pincement décrites, tandis que l'autre des deux rouleaux (2, 3) de la paire de rouleaux pinceurs (60) présente une partie de sommet de dent (8, 8') lisse, cylindrique et arrondie.

3. Granulateur presseur à rouleaux conforme à la revendication 1 **caractérisé par le fait que** les deux rouleaux (2, 3) de la paire de rouleaux pinceurs (60) présentent dans leur partie de sommet de dent (8, 8') les trois zones de pincement décrites.

4. Granulateur presseur à rouleaux conforme à l'une des revendications - précédentes, **caractérisé par** un dispositif de synchronisation (61) qui synchronise la rotation de la paire de rouleaux pinceurs de manière à ce que les parties de sommets de dents (8, 8') se trouvent en face l'une de l'autre au cours du processus de pincement.

5. Granulateur presseur à rouleaux conforme à l'une des revendications précédentes, **caractérisé par** un dispositif d'alimentation (17) destiné à introduire une gaine tubulaire (18) et sa masse de remplissage (19) coextrudée, les coussins de granulat (12) à former correspondant à des portions de la masse de remplissage (19) entourées d'une enveloppe extérieure faite du matériau de la gaine tubulaire (18).

6. Granulateur presseur à rouleaux conforme à l'une des revendications précédentes, **caractérisé en ce que** la zone de pincement d'entrée (9) est configurée pour former un raccord étanche à l'entrée du coussin de granulat (12), tandis que la zone de pincement de sortie (11) est configurée pour former un raccord étanche à la sortie du coussin de granulat (12) et que la zone de pincement centrale (10) est configurée pour former un profil de rupture entre les coussins de granulat (12).

7. Granulateur presseur à rouleaux conforme à l'une des revendications précédentes, **caractérisé en ce que** la zone de pincement centrale (10) de la partie de sommet de dent (8) présente pour former un profil de rupture un aplatissement (23), un palier (24) ou une section transversale (25) dépassant de la zone de pincement d'entrée (9) et de la zone de pincement de sortie (11).

8. Granulateur presseur à rouleaux conforme à l'une des revendications précédentes, **caractérisé par** une zone de pincement de sortie (11) plus longue que la zone de pincement d'entrée (9).

9. Granulateur presseur à rouleaux conforme à l'une des revendications précédentes, **caractérisé par** un alliage métallique du rouleau pinceur (3) et du rouleau presseur (2), les parties de sommets de dents (8, 8') des deux rouleaux (2, 3) présentant des surfaces résistantes à l'usure, de préférence des surfaces durcies ou des revêtements en métal dur ou en céramique.

10. Granulateur presseur à rouleaux conforme à l'une des revendications 5 à 9 **caractérisé en ce que** la gaine tubulaire (18) comporte des thermoplastiques du groupe des polyamides (PA), du polypropylène (PP), du polyéthylène à basse densité (PEBD), un copolymère (COP) ou un copolymère éthylène-alcool vinylique (EVOH), un copolymère éthylène-acétate de vinyle (EVA) et des produits du mélange de ces derniers avec différentes proportions de cires polyoléfines, de cires polyéthylènes, de cires polypropylènes ou de dérivés d'acides gras.

**11.** Granulateur presseur à rouleaux conforme à l'une des revendications précédentes, **caractérisé par** une denture oblique (26)
des deux rouleaux (2, 3) de la paire de rouleaux pinceurs (60) à angle de denture $\alpha$ compris entre

$$\arctan \pi D/nB \leq \alpha \leq 5 \arctan \pi D/nB,$$

D désignant le diamètre extérieur des rouleaux (2, 3), B leur largeur et n le nombre de dentures (4) sur le périmètre extérieur des rouleaux (2, 3).

**12.** Granulateur presseur à rouleaux conforme à l'une des revendications précédentes, **caractérisé en ce qu'**un coussin de granulat (12) présente une longueur l de

$$l \leq \pi D/n$$

n désignant le nombre de dentures (4) du rouleau pinceur (3) réparties sur le paramètre extérieur et D le diamètre extérieur du rouleau pinceur (3), tandis que la largeur b est égale à

$$b \leq B/N$$

B désignant la largeur du rouleau pinceur (3) et N le nombre de gaines tubulaires (18) à masse de remplissage (19) co-extrudée amenées parallèlement au rouleau pinceur (3), N étant égal à

$$N \leq 2B/\pi d$$

désignant le diamètre extérieur de la gaine tubulaire (18).

**13.** Installation de granulation (100) comprenant un granulateur presseur à rouleaux conforme à l'une des revendications 1 à 12, **caractérisée par** un dispositif d'extrusion (27) pour la co-extrusion de masses de remplissage (19) contenues dans des gaines tubulaires (18) en cordons plastiques (28), un dispositif d'alimentation (17) pour introduire les cordons plastiques (28) vers une paire de rouleaux pinceurs (60) composée d'un rouleau presseur (2) denté et d'un rouleau pinceur (3) denté et un dispositif de récupération (29) pour recueillir les cordons plastiques (28) réduits par la paire de rouleaux pinceurs (60) en coussins de granulat (12) composés d'une enveloppe extérieure et d'une masse de remplissage (19) coextrudée, un dispositif de commande et de réglage du granulateur presseur à rouleaux (1) coordonnant l'entrainement du rouleau pinceur (3) et la vitesse d'extrusion des cordons plastiques (28) et un dispositif de synchronisation (61) synchronisant la rotation de la paire de rouleaux pinceurs de manière à ce que les parties de sommets de dents (8, 8') se trouvent en face l'une de l'autre au cours du processus de pincement.

**14.** Utilisation du granulateur presseur à rouleaux (1) conformément à l'une des revendications 1 à 12 pour produire des coussins de granulat (12) à masse de remplissage (19) pulvérulente, liquide, visqueuse ou plastiquement déformable.

**15.** Utilisation du granulateur presseur à rouleaux (1) conformément à l'une des revendications 1 à 12 pour le découpage en portions de masses de remplissage (19) en coussins de granulat (12) à enveloppe extérieure à usage pharmaceutique, médicamenteux, cosmétique, adhésif ou destinées à être conditionnées sous emballage stérile.

Fig. 1
100
1
4
3
7
8
12
29
34
B
A
M
51
49
2
43
44
60
36
18
33
37
19
30
28
39
35
44
32
17
38
40
41
42
18
27
E1
E2

1
29
α
D
D
47
48
7
8
2
51
49
5
6
60
3
4
9
10
11
52
F
36
45
46

Fig. 2

**Fig. 3**

β
60
3
63
7
8
α
51
51
61
7
8
α
49
49
2
62

3
5
6
16
15
C
φa
φe
βa
βe
22
11
8
9
21
23
10

**Fig. 4**

**Fig. 5**

Fig. 6

3
c
7
14
13
7
14
13
15
16
5
5
25
6
2
11
25
6
21
9
10
8
25

Fig. 7

3
c
7
14
13
14
7
13
15
16
24
6
5
11
10
9
6
5
24
24
8

Fig. 8

3
c
14
13
14
13
15
16
7
7
24
6
5
11
24
8
9
6
5
24
10

# Fig. 9

Fig. 9a

60
7'
C
8
7
11
10
4
18
3
a
19
55
2
36
53
C

Fig. 9b

C
60
8
3
7'
8'
7
4
19
18
55
36
2
C

Fig. 9c

C
60
8
7'
8'
7
4
3
19
18
55
36
2
C

Fig. 9d
C
60
7'
8
8'
4
7
9
19
3
18
2
36
56
12
53
C
Fig. 9e
C
60
4
8'
7'
7
8
10
3
19
55
18
36
2
55'
56
12
53
C
Fig. 9f
60
C
4
7''
8'
8''
7'
7
8
11
3
19
55
18
2
55
56
12
C

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 3145614 C2
- DE 10347908 A1
- DE 3832566 C2
- DE 1297525 A
- DE 3622053 A1
- WO 2014127914 A1
- US 4028024 A
- US 6312225 B